# EUROPÄISCHE PATENTANMELDUNG

(11) **EP 2 302 306 A2**
(43) Veröffentlichungstag der Anmeldung: **30.03.2011**
(21) Anmeldenummer: 10175217.8
(22) Anmeldetag: 03.09.2010
(51) Int. Cl.: F24F 13/15

(54) **Jalousieklappensystem**

(30) Priorität: 05.09.2009 DE 202009012128 U
(71) Anmelder: TROX GmbH, 47506 Neukirchen-Vluyn (DE)
(72) Erfinder: Gurny, Rüdiger, 46459, Rees (DE); Sachse, Ronny, 46483, Wesel (DE)
(74) Vertreter: DR. STARK & PARTNER

(57) **Zusammenfassung**

Die Erfindung betrifft ein Jalousieklappensystem, umfassend einerseits einen rechteckigen Klappenrahmen mit zumindest zwei Lamellen, und andererseits einen mit dem Klappenrahmen verbundenen Einbaurahmen, wobei der Kontaktbereich zwischen dem Klappenrahmen und dem Einbaurahmen in einer solchen Ebene liegt, die parallel zu der durch die benachbarten Längsachsen der Lamellen aufgespannten Ebene ist oder dieser entspricht, bei dem der Einbaurahmen und der Klappenrahmen im Kontaktbereich mittels Befestigungen miteinander verbunden sind, die jeweils sich wenigstens teilweise deckende Ausnehmungen in dem Einbaurahmen und in dem Klappenrahmen im Kontaktbereich aufweisen, durch die jeweils ein Befestigungsmittel hindurchgeführt ist, wobei zumindest eine der beiden Ausnehmungen zumindest in einer Richtung deutlich größer als der Querschnitt des Befestigungsmittels in diesem Bereich ist und in dieser Ausnehmung ein ringscheibenähnlich ausgebildetes Zentrierelement vorgesehen ist, dessen Außenkontur mit der Ausnehmung zusammenwirkt und dessen Innenkontur mit dem Querschnitt des Befestigungsmittels zusammenwirkt, wobei das Zentrierelement aus einem bei steigender Temperatur weicher werdenden Material besteht, welches ab einer Temperatur von etwa 80°C zumindest eine Verlagerung des Befestigungsmittels, zumindest in einer durch das Zentrierelement bisher blockierten Verlagerungsrichtung erlaubt.

## Beschreibung

Die Erfindung betrifft ein Jalousieklappensystem, umfassend einerseits einen rechteckigen Klappenrahmen mit zumindest zwei parallel an ihm angeordneten, gegenläufig oder gleichlaufend um ihre jeweiligen Längsachsen schwenkbar gelagerten Lamellen, und andererseits einen mit dem Klappenrahmen verbundenen Einbaurahmen zur Montage der Jalousieklappe insbesondere an einer Decke oder einer Wand, wobei der Kontaktbereich zwischen dem Klappenrahmen und dem Einbaurahmen in einer solchen Ebene liegt, die parallel zu der durch die benachbarten Längsachsen der Lamellen aufgespannten Ebene ist oder dieser entspricht.

Jalousieklappen, auch Industrie- bzw. Tunnelklappen genannt, sind Bestandteil der Lüftungs- und Entrauchungsanlagen, wie z.B. in Straßentunneln. Sie werden in der Zwischendecke oberhalb der Fahrbahnen oder in den Lüftungszentralen eingebaut und sind beispielsweise aus Stahl oder Edelstahl gefertigt. Die Lamellen sind üblicherweise als Hohlprofil mit einem im Wesentlichen rhombusförmigen Querschnitt ausgebildet. Die Längsachse der Lamelle bildet die Schwenkachse. Zur Lagerung sind in dem Klappenrahmen Lagerelemente vorgesehen, die beispielsweise aus Edelstahl oder aus anderen speziellen Lagermaterialien gefertigt sein können.

Der spezifische Längenausdehnungskoeffizient für Stahl beträgt etwa 1,2 mm pro Meter und 100°C Temperaturerhöhung. Daher kommt es bei einer Jalousieklappe bei einer Breite x Höhe = 2 x 2 m und bei einer Temperaturerhöhung von 400°C zu einer Ausdehnung von nahezu 1 Zentimeter. Es besteht die Anforderung, dass die Jalousieklappe zu jeder Zeit uneingeschränkt funktionssicher ist und somit die Lamellen trotz Längenausdehnung sich frei bewegen lassen.

Bisher wurde dies mit Gleitklemmen realisiert. Hierzu weist der Einbaurahmen ein U-förmiges Profil. Der eine Schenkel des U-förmigen Profils ist mit dem Einbaurahmen verschraubt. Zur Befestigung des Einbaurahmens an der Wand oder der Decke werden die Gleitklemmen derart verwendet, dass sie den freien Rand des anderen Schenkels des Einbaurahmens übergreifen und der Schenkel so zwischen Gleitklemme und Wand bzw. Decke verklemmt wird. Kommt es zu einer Längenausdehnung der Jalousieklappe infolge einer Temperaturerhöhung kann sich die Tunnelklappe, d. h. auch der Einbaurahmen, relativ gegenüber der Wand bzw. Decke bewegen. Nachteilig hierbei ist, dass eine entsprechende Konstruktion recht aufwändig ist, da neben dem Einbaurahmen noch zusätzliche Gleitklemmen erforderlich sind.

Aufgabe der Erfindung ist es, die vorgenannten Nachteile zu vermeiden und ein Jalousieklappensystem anzugeben, dass konstruktiv einfacher und eine Ausdehnung der Jalousieklappe bei Temperaturerhöhung möglich ist.

Diese Aufgabe wird dadurch gelöst, dass der Einbaurahmen und der Klappenrahmen im Kontaktbereich mittels Befestigungen miteinander verbunden sind, die jeweils sich wenigstens teilweise deckende Ausnehmungen in dem Einbaurahmen und in dem Klappenrahmen im Kontaktbereich aufweisen, durch die jeweils ein Befestigungsmittel hindurchgeführt ist, wobei zumindest eine der beiden Ausnehmungen zumindest in einer Richtung, vorzugsweise in allen Richtungen, deutlich größer als der Querschnitt des Befestigungsmittels in diesem Bereich ist und in dieser Ausnehmung ein ringscheibenähnlich ausgebildetes Zentrierelement vorgesehen ist, dessen Außenkontur mit der Ausnehmung zusammenwirkt, insbesondere an diese angepasst ist, und dessen Innenkontur mit dem Querschnitt des Befestigungsmittels zusammenwirkt, insbesondere an diese angepasst ist, wobei das Zentrierelement aus einem bei steigender Temperatur weicher werdenden Material besteht, welches ab einer Temperatur von etwa 80°C zumindest eine Verlagerung des Befestigungsmittels, insbesondere von ca. 1/200 der Länge bzw. Breite des Klappenrahmens, zumindest in einer durch das Zentrierelement bisher blockierten Verlagerungsrichtung, vorzugsweise in allen durch das Zentrierelement bisher blockierten Verlagerungsrichtungen, erlaubt.

Es ist durchaus auch möglich, dass beide Ausnehmungen entsprechend ausgestaltet und mit einem Zentrierelement versehen sind. In diesem Fall ist das Befestigungsmittel beispielsweise als Niet ausgebildet.

Der Freiraum zwischen Befestigungsmittel und Ausnehmung wird mit dem Zentrierelement verschlossen, wobei das Zentrierelement gleichzeitig - bei einer runden Ausgestaltung - das Befestigungsmittel entsprechend mittig arretiert. Das Zentrierelement wird bei Temperaturerhöhung weich und gibt der Ausdehnung bzw. der Verschiebung der verschiedenen Bauteile in alle Richtungen nach. Damit wird sichergestellt, dass die Lamellen auch bei einer Temperaturerhöhung um 400°C beweglich bleiben. Somit bleibt die Entrauchungsfunktion der Jalousieklappe erhalten. Im Brandfall werden unmittelbar nach der Detektion des Brandes die Lamellen in der Nähe des Brandherdes zur Brandgasabsaugung automatisch geöffnet. Durch die erfindungsgemäße Ausgestaltung können zum einen die Herstellkosten reduziert werden, da auf separate Gleitklemmen verzichtet werden kann. Zum anderen wird der Montageaufwand erheblich reduziert.

Zumindest ein Befestigungsmittel kann als Schraube ausgebildet sein. Auch andere Ausgestaltungen sind möglich, wie beispielsweise eine Niete.

Zumindest eine Ausnehmung kann kreisrund ausgebildet sein. In diesem Fall ist das Zentrierelement außenseitig kreisrund ausgebildet, sofern es über seinen kompletten Umfang mit der Ausnehmung in Kontakt sein soll.

Zumindest eine Ausnehmung kann ein Innengewinde aufweisen.

Als Zentrierelement kann eine Kunststoffscheibe vorgesehen sein. Es sind aber auch andere Materialien denkbar, die bei Temperaturerhöhung weicher werden und somit eine Verlagerung erlauben.

Das Zentrierelement kann aus Polyamid bestehen.

Im Folgenden wird ein in den Zeichnungen dargestelltes Ausführungsbeispiel der Erfindung erläutert. Es zeigen:
- Fig. 1: einen Schnitt durch eine in einer Wand oder einer Decke eingebaute Jalousieklappe,

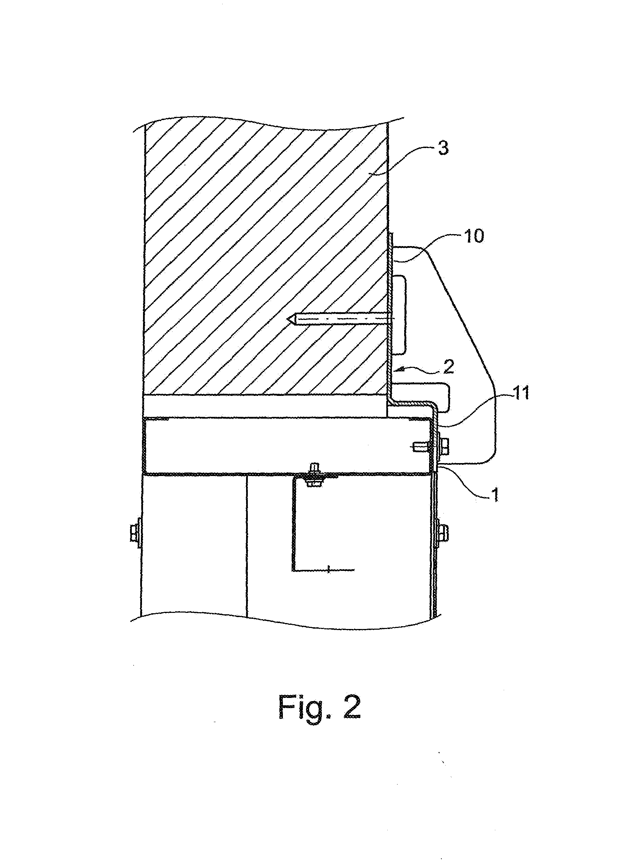

- Fig. 2: das Detail "X" aus Fig. 1 und
- Fig. 3: einen vergrößerten Ausschnitt aus Fig. 2.

In allen Figuren werden für gleiche bzw. gleichartige Bauteile übereinstimmende Bezugszeichen verwendet.

In den Figuren ist ein Jalousieklappensystem dargestellt, das einen rechteckigen Klappenrahmen 1 und eine mit dem Klappenrahmen 1 verbundenen Einbaurahmen 2 aufweist. Mittels des Einbaurahmens 2 wird die Jalousieklappe im dargestellten Ausführungsbeispiel im Bereich einer Öffnung an einer Wand 3 festgeschraubt.

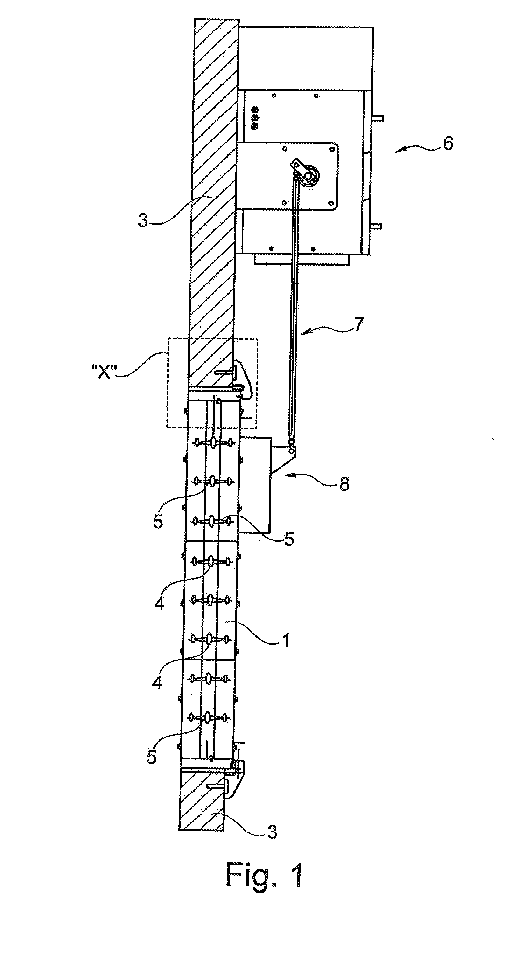

An dem Klappenrahmen 1 sind in dem dargestellten Ausführungsbeispiel acht parallel ausgerichtete und um ihre jeweilige Längsachse 4 schwenkbar gelagerte Lamellen 5 vorgesehen. Mittels eines Antriebs 6, der über eine Befestigungsstange 7 mit einem nicht näher dargestellten Übertragungselement 8 verbunden ist, sind die Lamellen 5 in ihrer Ausrichtung aus der in Figur 1 dargestellten Offenstellung in eine Schließstellung verschwenkbar.

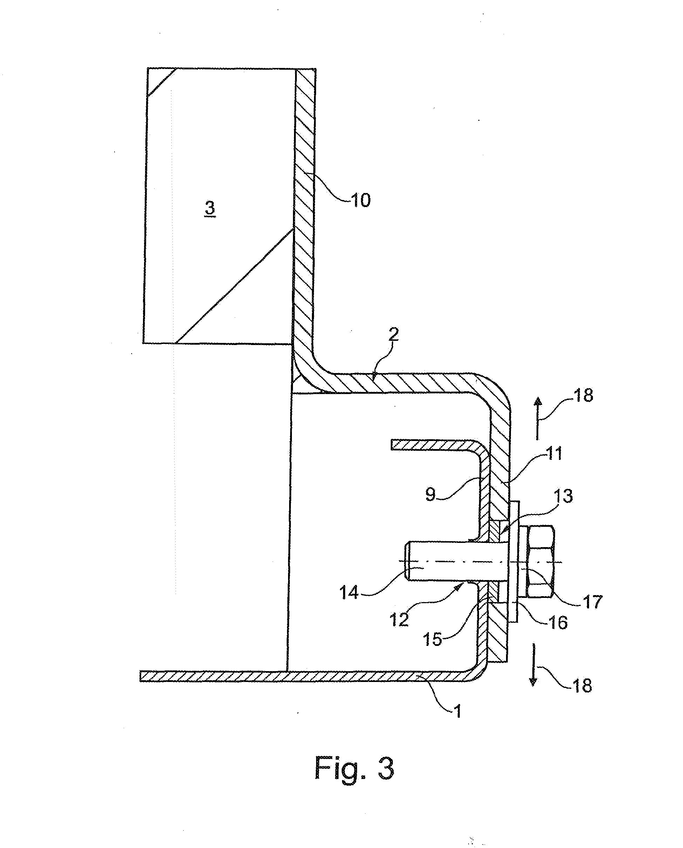

Wie aus Fig. 3 ersichtlich, weist der Klappenrahmen 1 einen umlaufenden nach außen weisenden Abschnitt 9 auf.

Der Einbaurahmen 2 ist im Wesentlichen S-förmig ausgebildet. Mittels des einen Schenkels 10 ist der Einbaurahmen 2 mit der Decke oder mit der Wand 3 in Kontakt. Der andere Schenkel 11 bildet zusammen mit dem umlaufenden Abschnitt 9 des Klappenrahmens 1 einen Kontaktbereich. Der Kontaktbereich liegt in einer Ebene, die parallel zu der durch die benachbarten Längsachsen 4 der Lamellen 5 aufgespannten Ebene liegt.

Wie deutlich den Figuren zu entnehmen ist, sind der Einbaurahmen 2 und der Klappenrahmen 1 im Kontaktbereich mittels Befestigung miteinander verbunden. Hierzu sind jeweils sich wenigstens teilweise deckende Ausnehmungen 12, 13 in dem Klappenrahmen 1 und in dem Einbaurahmen 2 im Kontaktbereich vorgesehen. In dem dargestellten Ausführungsbeispiel wird durch die Ausnehmungen 12, 13 ein als Schraube ausgebildetes Befestigungsmittel 14 hindurchgeführt.

Die Ausnehmung 12 in dem Klappenrahmen 1 weist ein Innengewinde auf. Die Ausnehmung 13 in dem Einbaurahmen 2 ist in allen Richtungen deutlich größer als der Querschnitt der Schraube in diesem Bereich ausgebildet. Zusätzlich ist in dieser Ausnehmung 13 ein ringscheibenähnlich ausgebildetes Zentrierelement 15 vorgesehen, das in dem dargestellten Ausführungsbeispiel als Kunststoffscheibe ausgebildet ist. Die Außenkontur der Kunststoffscheibe wirkt mit der Ausnehmung 13 zusammen und ist an diese angepasst, während die Innenkontur der Kunststoffscheibe mit dem Querschnitt der Schraube zusammenwirkt und dieser angepasst ist.

In dem darstellten Ausführungsbeispiel ist die Ausnehmung 13 in dem Einbaurahmen 2 etwas größer als der Schraubenkopf. Um ein Eintauchen des Schraubenkopfes in die Ausnehmung 13 zu verhindern, ist eine Unterlegscheibe 16, deren Durchmesser größer als der Durchmesser der Ausnehmung 13 ist, sowie ein Federring 17 vorgesehen. Der Federring 17 ist aber nicht zwingend erforderlich.

Bei Temperaturerhöhung wird die Kunststoffscheibe weicher, so dass eine Verlagerung u. a. in Richtung der Pfeile 18 möglich ist. Da die Kunststoffscheibe umlaufend ausgebildet ist, ist selbstverständlich eine Verlagerung in alle Richtungen mit Ausnahme in solche Richtungen, die eine Komponente in Richtung der Längserstreckung der Schraube aufweisen, möglich.

Selbstverständlich ist es auch möglich, dass die Ausnehmung 13 in dem Einbaurahmen 2 mit dem Innengewinde versehen ist, während die entsprechend größere Ausnehmung 12 mit dem Zentrierelement 15 dann in dem Klappenrahmen 1 vorgesehen ist. In diesem Fall wird die Schraube dann von der anderen Seite hineingedreht.

Auch ist es möglich, dass beide Ausnehmungen 12, 13 entsprechend größer ausgestaltet und mit einem Zentrierelement 15 versehen sind. Dann kann als Befestigungsmittel 14 beispielsweise eine Niete oder eine Schraube mit einer Mutter verwendet werden.

## Patentansprüche

1. Jalousieklappensystem, umfassend einerseits einen rechteckigen Klappenrahmen (1) mit zumindest zwei parallel an ihm angeordneten, gegenläufig oder gleichlaufend um ihre jeweiligen Längsachsen (4) schwenkbar gelagerten Lamellen (5), und andererseits einen mit dem Klappenrahmen (1) verbundenen Einbaurahmen (2) zur Montage der Jalousieklappe insbesondere an einer Decke (3) oder einer Wand, wobei der Kontaktbereich zwischen dem Klappenrahmen (1) und dem Einbaurahmen (2) in einer solchen Ebene liegt, die parallel zu der durch die benachbarten Längsachsen (4) der Lamellen (5) aufgespannten Ebene ist oder dieser entspricht, **dadurch gekennzeichnet, dass** der Einbaurahmen (2) und der Klappenrahmen (1) im Kontaktbereich mittels Befestigungen miteinander verbunden sind, die jeweils sich wenigstens teilweise deckende Ausnehmungen (12, 13) in dem Einbaurahmen (2) und in dem Klappenrahmen (1) im Kontaktbereich aufweisen, durch die jeweils ein Befestigungsmittel (14) hindurchgeführt ist, wobei zumindest eine der beiden Ausnehmungen (12, 13) zumindest in einer Richtung, vorzugsweise in allen Richtungen, deutlich größer als der Querschnitt des Befestigungsmittels (14) in diesem Bereich ist und in dieser Ausnehmung (12, 13) ein ringscheibenähnlich ausgebildetes Zentrierelement (15) vorgesehen ist, dessen Außenkontur mit der Ausnehmung (12, 13) zusammenwirkt, insbesondere an diese angepasst ist, und dessen Innenkontur mit dem Querschnitt des Befestigungsmittels (14) zusammenwirkt, insbesondere an diese angepasst ist, wobei das Zentrierelement (15) aus einem bei steigender Temperatur weicher werdenden Material besteht, welches ab einer Temperatur von etwa 80°C zumindest eine Verlagerung des Befestigungsmittels (14), insbesondere von ca. 1/200 der Länge bzw. Breite des Klappenrahmens (2), zumindest in einer durch das Zentrierelement (15) bisher blockierten Verlagerungsrichtung, vorzugsweise in allen durch das Zentrierelement bisher blockierten Verlagerungsrichtungen, erlaubt.

2. Jalousieklappensystem nach dem vorhergehenden Anspruch, **dadurch gekennzeichnet, dass** zumindest ein Befestigungsmittel (14) als Schraube ausgebildet ist.

3. Jalousieklappensystem nach einem der vorhergehenden Ansprüche, **dadurch gekennzeichnet, dass** zumindest eine Ausnehmung (12, 13) kreisrund ausgebildet ist.

4. Jalousieklappensystem nach dem vorhergehenden Anspruch, **dadurch gekennzeichnet, dass** eine Ausnehmung (12, 13) ein Innengewinde aufweist.

5. Jalousieklappensystem nach einem der vorhergehenden Ansprüche, **dadurch gekennzeichnet, dass** als Zentrierelement (15) eine Kunststoffscheibe vorgesehen ist.

6. Jalousieklappensystem nach einem der vorhergehenden Ansprüche, **dadurch gekennzeichnet, dass** das Zentrierelement (15) aus Polyamid besteht.
